Europäisches Patentamt

European Patent Office

Office européen des brevets

(11) Veröffentlichungsnummer: **0 677 721 A1**

## (12) EUROPÄISCHE PATENTANMELDUNG

(21) Anmeldenummer: **94105930.5**

(51) Int. Cl.6: **G01D 3/02**, G01D 18/00

(22) Anmeldetag: **16.04.94**

(43) Veröffentlichungstag der Anmeldung:
**18.10.95 Patentblatt 95/42**

(84) Benannte Vertragsstaaten:
**AT BE CH DE DK ES FR GB GR IE IT LI LU MC NL PT SE**

(71) Anmelder: **ABB Management AG**

Haselstrasse 16
**CH-5401 Baden (CH)**

(72) Erfinder: **Jensen, Kurt Helmer**
**Kirchgasse 75**
**CH-5236 Remigen (CH)**

(54) **Messvorrichtung, insbesondere für eine Erfassungsstation.**

(57) Die Messvorrichtung (4) enthält eine Sensoreinheit (5) und eine über eine Schnittstelle (11) mit der Sensoreinheit (5) verbundene Auswertevorrichtung (10). Bei dieser Messvorrichtung (4) wird bei der Ermittlung des echten Werts einer einen Sensor (13, 14) der Sensoreinheit (5) in einem vorgegebenen Messbereich beaufschlagenden Messgrösse die Abweichung zwischen dem Wert eines vom Sensor (13, 14) an der Schnittstelle (11) abgegebenen Messsignals und dem echten Wert der Messgrösse berücksichtigt.

Der Sensoreinheit (5) ist ein Datenspeicher (20) zugeordnet, in dem die Signalabweichung oder der Wert des vom Sensor (13, 14) an der Schnittstelle (11) ermittelten Messsignals in Abhängigkeit vom echten Wert der Messgrösse als Kalibrierdaten eingeschrieben sind. Bei der Ermittlung des echten Wertes des Messsignals werden die Kalibrierdaten aus dem Datenspeicher (20) abgerufen und zur Bildung des echten Wertes der Messgrösse herangezogen. Soll bei dieser Messvorrichtung (4) ein Sensor ausgewechselt werden, so kann nach Ausbau dieses Sensors die Sensoreinheit (5) mit dem neuem Sensor (13, 14) und dem Datenspeicher (22) an der Schnittstelle (11) aufgesteckt werden, ohne dass zusätzliche Kalibrierarbeiten erforderlich sind.

FIG.2

EP 0 677 721 A1

## TECHNISCHES GEBIET

Bei der Erfindung wird ausgegangen von einer Messvorrichtung mit einer mindestens einen Sensor enthaltenden Sensoreinheit und mit einer über eine Schnittstelle mit der Sensoreinheit verbundenen Auswertevorrichtung, bei der bei der Ermittlung des echten Wertes einer den Sensor in einem vorgegebenen Messbereich beaufschlagenden Messgrösse die Signalabweichung zwischen einem vom Sensor an der Schnittstelle abgegebenen Messsignal und dem echten Wert der Messgrösse berücksichtigt wird. Eine solche Messvorrichtung dient mit besonderem Vorteil dem Erfassen eines Messsignals in einem Prozess, insbesondere der Überwachung eines Verteilnetzes für elektrische Energie.

## STAND DER TECHNIK

Die Erfindung nimmt dabei auf einen Stand der Technik Bezug, wie er sich beispielsweise aus Indactic 65C Störschreiber Betriebsvorschrift Erfassungsstation HEDT 92730, 9105 der Fa. ABB Process Automation AG, Baden/Schweiz, 2. Auflage 1991, ergibt. Der in diesem Stand der Technik beschriebenen Erfassungsstation werden aus einem entfernt ablaufenden Prozess, beispielsweise der Verteilung elektrischer Energie in einem elektrischen Verteilnetz, analoge Strom- und Spannungssignale zugeführt. Diese Signale werden im Prozess von Geberelementen erzeugt, welche beispielsweise bei einem elektrischen Verteilnetz als hochspannungsausgesetzte Strom- und Spannungswandler ausgebildet sind. Von diesen Wandlern abgegebenen Strom- und Spannungssignale werden einem Strom- und einem Spannungswandler einer Messvorrichtung der Erfassungsstation zugeführt. Die von Strom- und Spannungswandlern der Messvorrichtung abgegebenen Ausgangssignale werden in einer Auswerteeinheit der Messvorrichtung mittels gespeicherter Kalibrierdaten auf Echtheit korrigiert. Die korrigierten Werte von Strom und Spannung werden sodann in einem zentralen Rechner der Erfassungsstation verarbeitet und die solchermassen gebildeten Informationen zum Betrieb des Verteilnetzes, beispielsweise zum Schalten von Schaltgeräten, verwendet.

Bei den in der Messvorrichtung verwendeten Strom- und Spannungswandlern weichen wie bei jedem zur Erfassung einer beliebigen physikalischen Grösse, wie beispielsweise Druck, Temperatur, Kraft oder Beschleunigung, vorgesehenen Sensor die vom Sensor abgegebenen Ausgangssignale zum Teil ganz erheblich von den Echtwerten der zu erfassenden Messgrössen ab. Das Ausgangssignal U ist in einem vorgegebenen Messbereich eines Sensors eine Funktion der Messgrösse MG:

$$U = F(MG).$$

Die Messgrössentransferfunktion F weist Parameter auf, wie etwa Nichtlinearität, Nichtmonotonie oder Alterung, welche den Zusammenhang zwischen der Messgrösse und dem Ausgangssignal beschreiben. Etwa durch geeignetes Bemessen einer vom Sensor beaufschlagten Bürde der Auswertevorrichtung oder durch Ablegen von Kalibrierdaten in einem Datenspeicher der Auswertevorrichtung können die Ausgangssignale des Sensors korrigiert und Echtwerte der Messgrösse nachgebildet werden. Bei einem Wechsel des Sensors muss jedoch die Messvorrichtung durch entsprechendes Einstellen der Bürde oder durch Eingabe von Daten in die Auswertevorrichtung neu kalibriert werden.

## KURZE DARSTELLUNG DER ERFINDUNG

Der Erfindung, wie sie in Patentanspruch 1 angegeben ist, liegt die Aufgabe zugrunde, eine Messvorrichtung der eingangs genannten Art zu schaffen, bei der eine Auswechselung eines Sensors ohne zusätzliche Kalibrierarbeiten durchgeführt werden kann.

Die Messvorrichtung nach der Erfindung zeichnet sich gegenüber vergleichbaren Messvorrichtungen nach dem Stand der Technik dadurch aus, dass sie durch einfachen Aufstecken einer Sensoreinheit auf eine Schnittstelle der Messvorrichtung betriebsbereit gemacht werden kann. Kalibrierarbeiten entfallen, da die Sensoreinheit einen Sensor sowie ein Kalibrierprotokoll des Sensors enthält, welches nach dem Aufstecken der Sensoreinheit auf die Schnittstelle von der Auswertevorrichtung der Messvorrichtung abgerufen und zur Korrektur der an die Schnittstelle ausgegebenen Messsignale des Sensors verwendet werden kann. Das Kalibrierprotokoll beinhaltet vor allem Korrekturwerte betreffend die Nichtlinearität in einem vorgegebenen Messbereich des Sensors, umfasst mit Vorteil aber auch Daten, welche zur Korrektur des Ausgangssignals aufgrund zusätzlicher Parameter, wie Temperatur und/oder Alterung, und/oder zur Kennung des Sensors aufgrund ergänzender Angaben, wie Herstellername, Herstellungsdatum und/oder Kalibrierdatum, verwendet werden.

## KURZE BESCHREIBUNG DER ZEICHNUNGEN

Ein bevorzugtes Ausführungsbeispiel der Erfindung und die damit erzielbaren weiteren Vorteile werden nachfolgend anhand von Zeichnungen näher erläutert. Hierbei zeigt:

Fig.1      ein Blockschaltbild einer Erfassungsstation, in der eine Messvorrichtung nach der Erfindung vorgesehen ist,

Fig.2 ein Schaltbild der aus Fig.1 ersichtlichen Messvorrichtung, und

Fig.3 ein Diagramm, in dem das von einem Sensor der Messvorrichtung an einer Schnittstelle ausgegebene Messsignal U einer den Sensor beaufschlagenden Messgrösse in Abhängigkeit vom echten Wert $U_e$ der Messgrösse dargestellt ist.

WEGE ZUR AUSFÜHRUNG DER ERFINDUNG

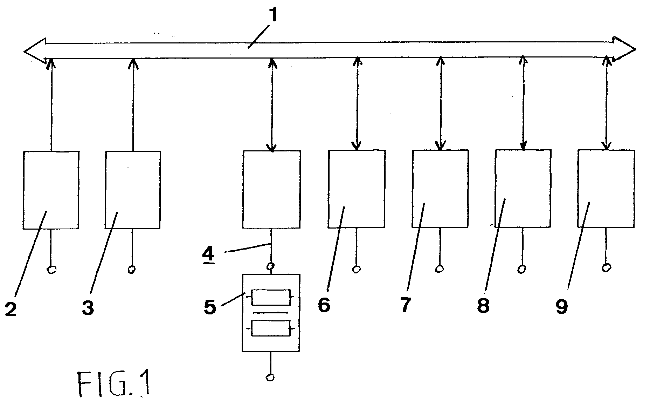

Die in Fig.1 dargestellte Erfassungsstation ist aus Modulen aufgebaut, die über einen Systembus 1 kommunizieren. Eines der Module dient als Speisegerät 2. Dieses Speisegerät übernimmt die galvanische Trennung von einer speisenden Quelle und erzeugt die von der Erfassungsstation benötigten Spannungen. Weitere Module sind eine digitale Signale aus einem Prozess erfassende und weiterverarbeitende Digitaleingabe 3 und eine Messvorrichtung 4, welche als Analogeingabe dient und eine Sensoreinheit 5 aufweist, welche mit analogen Prozesssignalen beaufschlagt ist. Solche Prozesssignale sind beispielsweise die von Strom- und Spannungswandlern einer Schaltanlage eines elektrischen Energieverteilnetzes abgegebenen Strom- und Spannungssignale. Diese Signale werden von der Messvorrichtung fortlaufend ermittelt und zur Weiterverarbeitung über den Systembus 1 zu einem Mikrorechner 6 geführt, in dem aus den von der Messvorrichtung 6 und der Digitaleingabe 3 abgegebenen Signalen Steuersignale errechnet werden, welche über eine Bedienungseinheit 7 zum Prozess, beispielsweise zu den Schaltgeräten des Energieverteilnetzes geführt werden. An den Systembus 1 sind als weitere Module ferner eine serielle Schnittstelle 8 und ein Modem 9 angeschlossen, welche der Verbindung zu einem Störschreiber und der Kommunikation auf einer externen Übertragungsleitung dienen.

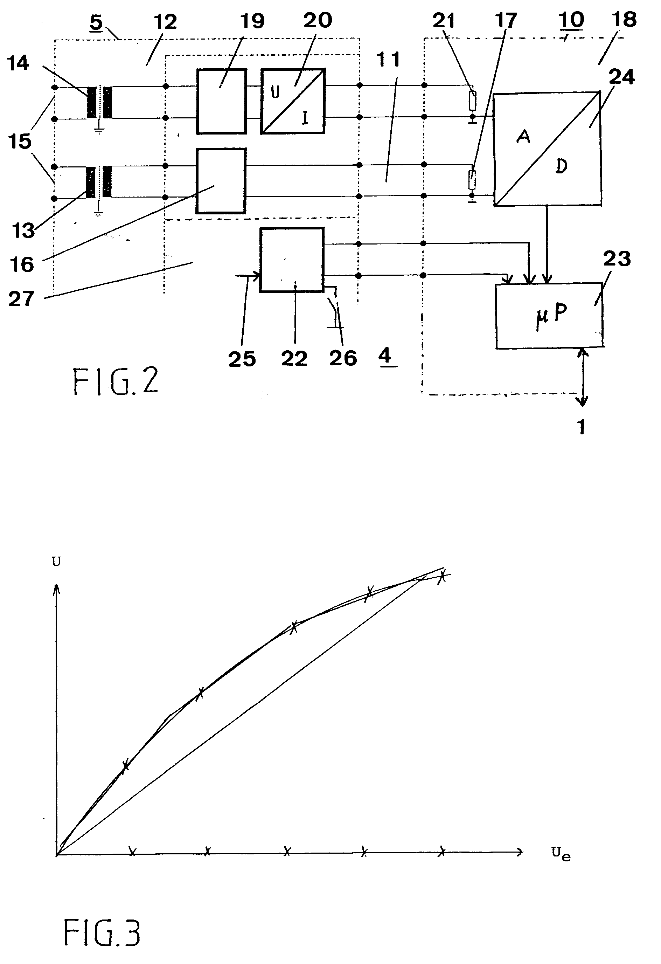

Der Aufbau der Messvorrichtung 4 ist in Fig.2 dargestellt. Aus dieser Figur ist ersichtlich, dass die Messvorrichtung 4 die Sensoreinheit 5 und eine Auswertevorrichtung 10 enthält, welche beispielsweise durch Stecken auf eine Busplatine an einer Schnittstelle 11 galvanisch miteinander verbunden sind.

Die Sensoreinheit 5 besteht im wesentlichen aus einem plattenförmigen Träger 12 aus Isolierstoff, beispielsweise eine Printplatte, auf die mehrere, beispielsweise neun, Strom- 13 und Spannungswandler 14 montiert sind. Die Primärwicklungen der Wandler sind jeweils an ein Hochstromklemmenpaar 15 angeschlossen, welches an der Frontseite der Sensoreinheit 5 vorgesehen ist. Die Sekundärwicklungen der Stromwandler 13 sind über ein Filter 16 an die Schnittstelle 11 und damit an Bürden 17 geführt, welche auf einer Printplatte 18 der Auswertevorrichtung 10 angebracht sind. Die Sekundärwicklungen der Spannungswandler 14 sind über ein Filter 19 und einen dem Filter 19 nachgeschalteten Spannungs-Strom-Konverter 20 an die Schnittstelle 11 und damit an Bürden 21 geführt, welche ebenfalls auf der Printplatte 18 angebracht sind.

Auf dem Träger 12 der Sensoreinheit 5 ist ein vorzugsweise als EEPROM ausgebildeter und mit der Schnittstelle 11 verbundener Datenspeicher 22 angeordnet. Dieser Datenspeicher 22 ist mit einem Mikrorechner 23 verbunden, dem Ausgangssignale eines eingangsseitig mit den Bürden 17, 21 verbundenen Analog-Digital-Wandlers 24 zugeführt werden. In den Datenspeicher 22 werden bei der Herstellung der Sensoreinheit 5 Daten eingeschrieben, welche die Kalibrierung der Strom- und Spannungswandler betreffen. Die eingeschriebenen Daten sind vor unbefugtem weiterem Schreiben geschützt. Ein Zugang zu diesen Daten ist nur dann möglich, wenn der Datenspeicher 22 durch eine spezifische Spannung 25 oder eine Schaltung 26 aktiviert wird. Statt auf dem Träger 12 kann der Datenspeicher 22 auch auf einem Träger 27 angeordnet sein, welcher unhängig vom Träger 12 bewegbar und über die Schnittstelle 11 mit dem Mikrorechner 23 der Auswertevorrichtung 10 verbindbar ist.

Die elektronischen Baugruppen der Sensoreinheit 5 und der Auswertevorrichtung 10 sind von den Strom- 13 und Spannungswandlern 14 durch als magnetische Schirmung diendende Gehäuse von der Auswertevorrichtung 10 getrennt.

Die Strom- 13 und Spannungswandler 14 erzeugen die für die Weiterverarbeitung in der Auswertevorrichtung notwendigen analogen Messsignale und stellen zugleich die galvanische Trennung zwischen den vom Prozess an die Hochstromklemmenpaare 15 geführten analogen Strom- und Spannungssignalen und den analogen Messsignalen her. Zugleich bilden die Wandler zusammen mit den Filtern 16, 19 EMV-Barrieren zwischen dem Prozess und der Elektronik und koppeln gegebenenfalls durch den Prozessstrom und/oder die Prozessspannung eingekoppelte Störpegel aus. Die Spannungsmesssignale der Spannungswandler 14 werden im Spannungs-Strom-Konverter 20 in Stromsignale umgewandelt. Den Bürden 17, 21 werden so über die Schnittstelle 11 eingeprägte analoge Stromsignale zugeführt. Diese Signale werden an den Bürden in analoge Spannungssignale umgewandelt. Die Spannungssignale werden im Analog-Digital-Wandler 24 digitalisiert und schliesslich in Form digitaler Spannungssignale in den Mikrorechner 23 eingelesen.

Bei der Auswertung dieser von den Wandlern ermittelten Messsignale ruft der Mikrorechner 23 die in den Datenspeicher 22 eingelesenen Kalibrierdaten auf. Als Kalibrierdaten sind im Datenspeicher 22 für jeden Wandler die Abweichung zwischen dem vom Wandler an der Schnittstelle 11 ausgegebenen Messsignal und dem echten Wert der den Wandler beaufschlagenden Messgrösse bzw. der Wert des vom Wandler an der Schnittstelle 11 ausgegebenen Messsignals U in Abhängigkeit vom echten Wert $U_e$ der Messgrösse eingeschrieben. Diese Daten werden bei der Herstellung der Sensoreinheit im erwünschten Messbereich der Wandler durch Anlegen einer kalibrierten Strom- bzw. Spannungsquelle veränderlicher Stärke an das Hochstromklemmenpaar 15 und Zuordnung der an der Schnittstelle 11 ausgegebenen Werte der Messsignale zu den echten Strom- oder Spannungswerten ermittelt.

Die funktionelle Abhängigkeit des an der Schnittstelle 11 ausgegebenen Messsignals U vom echten Wert $U_e$ der Messgrösse ist in Fig.3 als durchgezogene Kurve dargestellt. Aus Fig. 3 ist zudem ersichtlich, dass die solchermassen ermittelte funktionelle Abhängigkeit des Messsignals U vom echten Wert $U_e$ der Messgrösse nachgebildet ist durch annähernd gleichmässig über den Messbereich des Sensors verteilte diskrete Werte des Messsignals, und dass jeder dieser diskreten Werte zusammen mit einem aus dem Kalibriervorgang ermittelten echten Wert der Messgrösse als diskretes Wertepaar im Datenspeicher 22 eingeschrieben ist (in Fig.3 durch Kreuze gekennzeichnet).

Anstelle des vom Sensor an der Schnittstelle 11 eingegebenen Messsignals kann auch die Abweichung des Messignals vom echten Wert der Messgrösse in den Datenspeicher 22 eingeschrieben werden. Der Mikrorechner 23 kann diese Daten aus dem Datenspeicher 22 abrufen und ermittelt dann den echten Wert der Messgrösse durch Zuordnung des von der Sensoreinheit 5 ausgegebenen Messsignals zu einem passenden diskreten Wertepaar. Der echte Wert der Messgrösse wird sodann an den Systembus 1 weitergegeben. Bei der Ermittlung dieses Echtwertes kann der Mikrorechner zusätzlich auch Korrekturdaten berücksichtigen, welche die Auswertevorrichtung 10 betreffen und welche in einen nicht dargestellten Datenspeicher der Auswertevorrichtung 10 eingelesen sind.

Wie aus Fig. 3 ersichtlich ist, kann die funktionelle Abhängigkeit des Messsignals vom echten Wert der Messgrösse aber auch dadurch nachgebildet werden, in den Datenspeicher 22 lineare, jeweils einem Teil des Messbereichs des Sensors abdeckende Kurvenabschnitte eingeschrieben sind, und dass jeder dieser Kurvenschnitte jeweils zusammen mit zwei aus einem Kalibriervorgang ermittelten und den zugeordneten Teil des Messbereichs begrenzenden echten Werten der Messgrösse im Datenspeicher (22) eingeschrieben ist.

Anstelle eines Datenspeichers 22 für alle Sensoren der Sensoreinheit 5 kann jedem Sensor auch ein separater Datenspeicher zugeordnet werden. Beim Ersetzen eines defekten Sensors braucht dann nicht die ganze Sensoreinheit 5 entfernt zu werden, es genügt, wenn lediglich der defekte Sensor und der zugeordnete Datenspeicher 22 in der Sensoreinheit 5 ausgewechselt werden.

Mit Vorteil können in den Datenspeicher ferner Daten eingeschrieben sind, welche zur Korrektur des Ausgangssignals aufgrund zusätzlicher Parameter, wie Temperatur und/oder Alterung, und/oder zur Kennung des Sensors aufgrund ergänzender Angaben, wie Herstellername, Herstellungsdatum und/oder Kalibrierdatum, verwendet werden. Mit Hilfe dieser Daten kann die Messgenauigkeit des Messgerätes über eine grossen Zeitraum und bei erschwerten Bedingungen beibehalten werden und können Probleme bei der Zuordnung der einzelnen Sensoren einer Sensoreinheit 5 sowie verschiedener Sensoreinheiten vermieden werden.

## BEZUGSZEICHENLISTE

| | |
|---|---|
| 1 | Systembus |
| 2 | Speisegerät |
| 3 | Digitaleingabe |
| 4 | Messvorrichtung |
| 5 | Sensoreinheit |
| 6 | Mikrorechner |
| 7 | Bedienungseinheit |
| 8 | serielle Schnittstelle |
| 9 | Modem |
| 10 | Auswertevorrichtung |
| 11 | Schnittstelle |
| 12 | Träger |
| 13 | Stromwandler |
| 14 | Spannungswandler |
| 15 | Hochstromklemmenpaare |
| 16 | Filter |
| 17 | Bürden |
| 18 | Printplatte |
| 19 | Filter |
| 20 | Spannungs-Strom-Konverter |
| 21 | Bürden |
| 22 | Datenspeicher |
| 23 | Mikrorechner |
| 24 | Analog-Digital-Wandler |
| 25 | Spannung |
| 26 | Schaltung |
| 27 | Träger |

## Patentansprüche

1. Messvorrichtung (4) mit einer mindestens einen Sensor enthaltenden Sensoreinheit (5) und mit einer über eine Schnittstelle (11) mit der Sensoreinheit (5) verbundenen Auswertevorrichtung (10), bei der bei der Ermittlung des echten Wertes einer den Sensor in einem vorgegebenen Messbereich beaufschlagenden Messgrösse die Abweichung eines vom Sensor an der Schnittstelle ausgegebenen Messsignals vom echten Wert der Messgrösse berücksichtigt wird, dadurch gekennzeichnet, dass der Sensoreinheit (5) ein Datenspeicher (22) zugeordnet ist, in dem die Signalabweichung oder der Wert des vom Sensor an der Schnittstelle (11) ausgegebenen Messsignals in Abhängigkeit vom echten Wert der Messgrösse eingeschrieben sind, und der bei der Ermittlung des echten Werts der Messgrösse von der Auswertevorrichtung (10) über die Schnittstelle (11) abrufbar ist.

2. Messvorrichtung nach Anspruch 1, dadurch gekennzeichnet, dass die Abhängigkeit nachgebildet ist durch annähernd gleichmässig über den Messbereich des Sensors verteilte diskrete Werte der Signalabweichung oder des vom Sensor an der Schnittstelle (11) ausgegebenen Messsignals, und dass jeder dieser Werte zusammen mit einem aus einem Kalibriervorgang ermittelten echten Wert der Messgrösse als diskretes Wertepaar im Datenspeicher (22) eingeschrieben ist.

3. Messvorrichtung nach Anspruch 1, dadurch gekennzeichnet, dass die Abhängigkeit nachgebildet ist durch lineare, jeweils einen Teil des Messbereichs des Sensors abdeckende Kurvenabschnitte, und dass jeder dieser Kurvenschnitte jeweils zusammen mit zwei aus einem Kalibriervorgang ermittelten und den zugeordneten Teil des Messbereichs begrenzenden echten Werten der Messgrösse im Datenspeicher (22) eingeschrieben ist.

4. Messvorrichtung nach einem der Ansprüche 1 bis 3, dadurch gekennzeichnet, dass in den Datenspeicher (22) ferner Daten eingeschrieben sind, welche zur Korrektur des Messsignals aufgrund zusätzlicher Parameter, wie Temperatur und/oder Alterung, und/oder zur Kennung des Sensors aufgrund ergänzender Angaben, wie Herstellername, Herstellungsdatum und/oder Kalibrierdatum, verwendet werden.

5. Messvorrichtung nach einem der Ansprüche 1 bis 4, dadurch gekennzeichnet, dass der Datenspeicher (22) eine Sicherung gegen unbefugtes Schreiben aufweist.

6. Messvorrichtung nach einem der Ansprüche 1 bis 5, dadurch gekennzeichnet, dass Sensor und Datenspeicher (22) auf einem gemeinsamen Träger (12) angeordnet sind.

7. Messvorrichtung nach einem der Ansprüche 1 bis 5, dadurch gekennzeichnet, dass Sensor und Datenspeicher (22) auf unabhängig voneinander bewegbaren Trägern (12, 27) angeordnet sind.

8. Messvorrichtung nach einem der Ansprüche 6 oder 7, insbesondere für eine Erfassungsstation, dadurch gekennzeichnet, dass die Sensoreinheit als Sensor mindestens einen Stromwandler (13) mit einer Prozessstrom als Messgrösse erfassenden Primärwicklung und einer auf die Schnittstelle (11) wirkenden Sekundärwicklung und/oder mindestens einen Spannungswandler (14) mit einer Prozessspannung als Messgrösse erfassenden Primärwicklung und einer auf die Schnittstelle (11) wirkenden Sekundärwicklung aufweist.

9. Messvorrichtung nach Anspruch 8, dadurch gekennzeichnet, dass zwischen den Sekundärwicklungen von Strom- (13) und Spannungswandler (14) und der Schnittstelle (11) jeweils ein Filter (16, 19) angeordnet ist, welches der Auskoppelung von Störpegeln dient, die durch den Prozessstrom und/oder die Prozessspannung eingekoppelt werden.

10. Messvorrichtung nach Anspruch 9, dadurch gekennzeichnet, dass zwischen dem dem Spannungswandler (14) nachgeschalteten Filter (19) und der Schnittstelle (11) ein Spannungs-Strom-Konverter (20) angeordnet ist.

11. Messvorrichtung nach einem der Ansprüche 8 bis 10, dadurch gekennzeichnet, dass die Sensoreinheit (5) und die Auswertevorrichtung (10) durch ein als magnetische Schirmung dienendes Gehäuse (25) von der Auswertevorrichtung (10) getrennt sind.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-5 089 979 (MCEACHERN ET AL.)<br><br>* Spalte 2, Zeile 43 - Spalte 3, Zeile 47; Abbildungen 1-4 * | 1,2,4,6,7 | G01D3/02<br>G01D18/00 |
| Y | | 3,5,8 | |
| Y | FR-A-2 234 550 (INTEGRATED PHOTOMATRIX LIMITED)<br>* Seite 3, Zeile 16 - Seite 5, Zeile 29 * | 3 | |
| Y | WO-A-86 03831 (ROBERT BOSCH GMBH)<br>* Seite 7, Zeile 15 - Zeile 17 * | 5 | |
| Y | WO-A-90 00740 (COOPER ET AL.)<br>* Seite 9, Zeile 30 - Seite 10, Zeile 3 * | 8 | |
| A | PATENT ABSTRACTS OF JAPAN<br>vol. 15, no. 209 (E-1072) 28. Mai 1991<br>& JP-A-03 058 512 (NEC CORP)<br>* Zusammenfassung * | 9 | |

RECHERCHIERTE SACHGEBIETE (Int.Cl.6)

G01D
G01R

Der vorliegende Recherchenbericht wurde für alle Patentansprüche erstellt

| Recherchenort | Abschlußdatum der Recherche | Prüfer |
|---|---|---|
| DEN HAAG | 18. August 1994 | Lut, K |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
    Dokument

EPO FORM 1503 03.82 (P04C03)